**Europäisches Patentamt**

**European Patent Office**

**Office européen des brevets**

(11) Veröffentlichungsnummer: **0 200 946**
**A1**

## EUROPÄISCHE PATENTANMELDUNG

(21) Anmeldenummer: **86104948.4**

(22) Anmeldetag: **10.04.86**

(51) Int. Cl.⁴: **H 02 H 3/44**

(30) Priorität: **30.04.85 CH 1832/85**

(43) Veröffentlichungstag der Anmeldung: **12.11.86**
**Patentblatt 86/46**

(84) Benannte Vertragsstaaten: **AT CH DE FR GB LI SE**

(71) Anmelder: **BBC Aktiengesellschaft Brown, Boveri & Cie., Haselstrasse, CH-5401 Baden (CH)**

(72) Erfinder: **Ari, Niyazi, Dr., Landstrasse 154, CH-5415 Nussbaumen (CH)**
Erfinder: **Hansen, Diethard, Dr., Bahnhofstrasse 39a, CH-8965 Berikon (CH)**
Erfinder: **Holtink, Hendrik, Dorfstrasse 4, CH-5200 Windisch (CH)**
Erfinder: **Schär, Hans, Dr., Solothurnerstrasse 41, CH-4053 Basel (CH)**

(54) **Schutzvorrichtung für einen an eine Energieversorgungsleitung eines elektrischen Energienetzes angeschlossenen Verbraucher.**

(57) Die vorliegende Erfindung betrifft eine Schutzvorrichtung (3) für einen an eine Energieversorgungsleitung (1) eines elektrischen Energienetzes angeschlossenen Verbraucher (2) mit einem netzseitig vor dem Verbraucher (2) in die Energieversorgungsleitung (1) geschalteten LC-Netzwerk (3.1) mit Tiefpaßeigenschaften. Um vom Verbraucher (2) auch Störungen mit Frequenzen unterhalb der Grenzfrequenz des LC-Netzwerks (3.1) fernhalten zu können, wird gemäß der Erfindung mit dem LC-Netzwerk (3.1) in der Energieversorgungsleitung (1) in Reihe ein von einer Überwachungseinrichtung (3.2) gesteuertes Schaltelement (3.3) angeordnet. Die Überwachungseinrichtung (3.2) ist netzseitig an einem Anschlußpunkt (3.4) vor dem Schaltelement (3.3) an die Energieversorgungsleitung (1) angeschlossen und hält das Schaltelement (3.3) nur solange geschlossen, als der Momentanwert $(dU(t)/dt)$ der zeitlichen Ableitung der Spannung auf der Energieversorgungsleitung (1) vom Momentanwert $(dU_0(t)/dt)$ eines in seinem zeitlichen Verlauf vorgebbaren Sollwertes nicht um mehr als einen gleichfalls vorgebbaren Betrag $(G_1, G_2)$ abweicht.

0200946

45/85

30.4.85

La/eh

- 1 -

Schutzvorrichtung für einen an eine Energieversorgungsleitung eines elektrischen Energienetzes angeschlossenen Verbraucher

Die Erfindung betrifft eine Schutzvorrichtung für einen
an eine Energieversorgungsleitung eines elektrischen
Energienetzes angeschlossenen Verbraucher gemäss dem
Oberbegriff des Anspruchs 1.

Schutzvorrichtungen dieser Art, welche man auch als
Netzfilter bezeichnen kann, dienen dazu, auf der Energieversorgungsleitung vorhandene Störungen vom Verbraucher,
z.B. einem empfindlichen elektronischen Gerät, fernzuhalten. Es sind eine Vielzahl von verschiedenen Ausführungen solcher Schutzvorrichtungen bekannt. Allen
diesen Ausführungsformen gemein ist jedoch das Problem,
dass nur hochfrequente Störungen im Hochfrequenz-Bereich
ausreichend gut unterdrückt werden. So liegt die untere
Grenzfrequenz der bekannten Netzfilter selten erheblich
unter 50 kHz. Störungen mit geringeren Frequenzen oder
rampenförmige Anstiege, wie sie z.B. durch Nachströme

0200946
45/85

von Blitzen, Schaltstösse oder durch langsame elektromagnetische Pulse (hier ist vor allem an die sogenannten MHD-EMP, die magnetohydrodynamischen EMP-Pulse gedacht, welche als Spätfolge der Zündung von nuklearen Sprengsätzen oberhalb der Atmosphärenschicht der Erde auftreten) H.W. Zaininger, Electromagnetic Pulse (EMP) Interaction with Electric Power Systems; Report ORNL/Sub.-82-47905/1, August 1984, Zainiger Engineering Company, 3408 Vance Court, San Jose, California 95132, verursacht werden, werden durch die bekannten Schutzvorrichtungen nicht ausreichend unterdrückt. Zwar lassen sich theoretisch durch Verwendung von ausreichend grossen Kapazitäten und Induktivitäten passive LC-Netzwerke mit beliebig niedrigen Grenzfrequenzen realisieren. Praktisch liegt die erreichbare untere Grenzfrequenz jedoch etwa bei dem vorgenannten Wert von 50 kHz. Dies hat seinen Grund zum einen darin, dass die Grösse der Kapazitäten aus sicherheitstechnischen Gründen, insbesondere aus Gründen des Berührungsschutzes, begrenzt ist. Zum andern ist auch die Grösse der Induktivitäten von ihrer noch sinnvollen Baugrösse her begrenzt.

Die Erfindung, wie sie in den Ansprüchen gekennzeichnet ist, löst die Aufgabe, eine Schutzvorrichtung der eingangs genannten Art anzugeben, mit der auch Störungen mit Frequenzen unterhalb der Grenzfrequenz des LC-Netzwerks sicher vom Verbraucher ferngehalten werden können.

Die Vorteile der Erfindung sind im wesentlichen darin zu sehen, dass das von der Erfindung angestrebte Ziel ohne die Verwendung sicherheitstechnisch bedenklicher Kapazitäten sowie unhandlich grosser und teurer Induktivitäten erreicht wird.

Weitere Vorteile der Erfindung ergeben sich aus der nachfolgenden Beschreibung eines Ausführungsbeispiels, wobei auf die Zeichnung Bezug genommen wird.

Es zeigt:

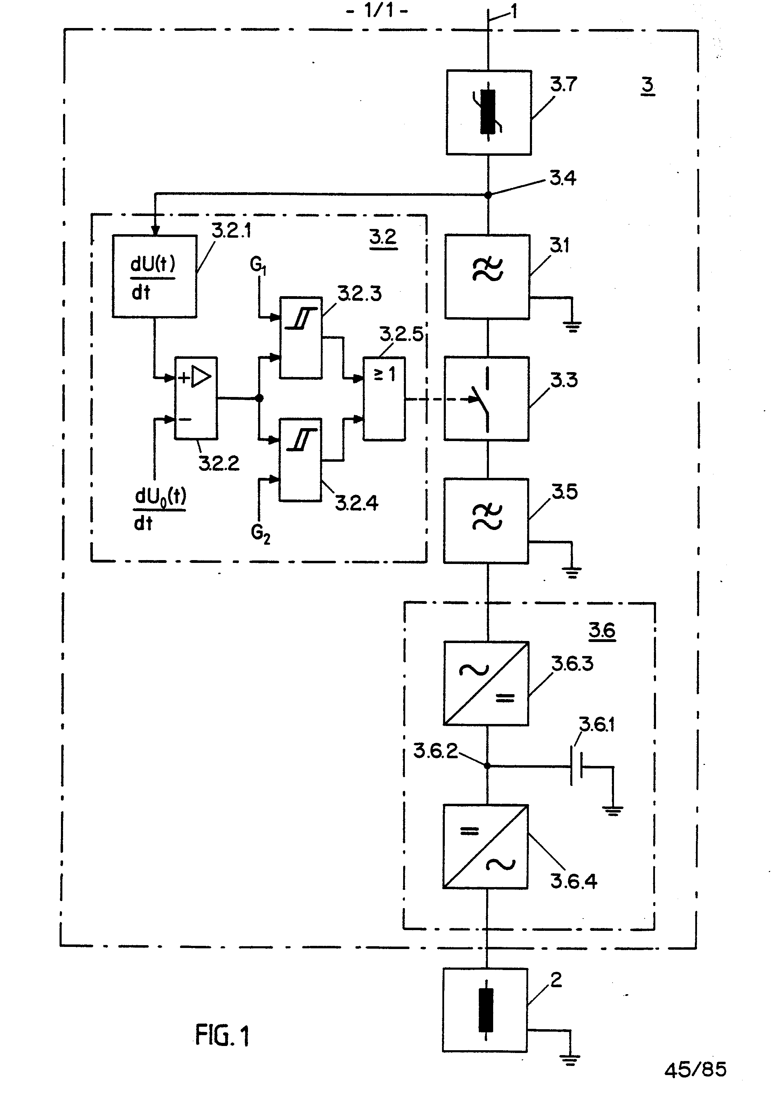

Fig. 1 ein Blockschaltbild einer Schutzvorrichtung nach der Erfindung.

In Fig. 1 ist mit 1 eine Energieversorgungsleitung eines elektrischen Energienetzes, mit 2 ein elektrischer Verbraucher und mit 3 eine Schutzvorrichtung für diesen Verbraucher bezeichnet. Die Energieversorgungsleitung 1 kann beispielsweise eine 220 V Wechselspannungsleitung, genausogut aber auch eine Gleichspannungsleitung sein. Unter dem Verbraucher 2 könnte man sich beispielsweise eine elektronische Schaltung vorstellen. Da es für die Erläuterung der Erfindung auf die Art des Verbrauchers 2 jedoch nicht ankommt, ist dieser lediglich durch eine Impedanz in einem Rechteck symbolhaft dargestellt. Die Schutzvorrichtung 3 ist netzseitig vor dem Verbraucher 2 in der Energieversorgungleitung 1 angeordnet und weist ein in die Energieversorgungsleitung 1 geschaltetes LC-Netzwerk 3.1 mit Tiefpasseigenschaften auf. Gemäss der Erfindung ist mit dem LC-Netzwerk 3.1 in der Energieversorgungsleitung 1 in Reihe ein von einer Ueberwachungseinrichtung 3.2 gesteuertes Schaltelement 3.3 angeordnet. Die Ueberwachungseinrichtung 3.2 ist netzseitig an einem Anschlusspunkt 3.4 vor dem Schaltelement 3.3 an die Energieversorgungsleitung 1 angeschlossen.

Durch die Ueberwachungseinrichtung 3.2 wird das Schaltelement 3.3 solange geschlossen gehalten, als der Momentanwert der zeitlichen Ableitung der Spannung auf der Energieversorgungsleitung 1 vom Momentanwert eines in seinem zeitlichen Verlauf vorgebbaren Sollwertes dieser zeitlichen Ableitung nicht um mehr als einen gleichfalls vorgebbaren Betrag abweicht. Wird der vorgebbare Betrag der zulässigen Abweichung dagegen, z.B. aufgrund einer kritischen Störung auf der Energieversorgungsleitung 1, überschritten, so wird das Schaltelement 3.3 durch die Ueberwachungseinrichtung 3.2 geöffnet. Die die jeweilige Abweichung und Oeffnung des Schaltelements 3.3 verursachende Störung kann bei geöffnetem Schaltelement 3.3 natürlich nicht zum Verbraucher 2 gelangen. Das Schaltelement 3.3 wird von der Ueberwachungsvorrichtung 3.2 erst dann wieder geschlossen, wenn die Störung abgeklungen ist, wenn also die Abweichung wieder unter ihren maximal zulässigen Wert zurückgekehrt ist. Man kann daher auch sagen, dass die Störung ausgetastet wird.

Zur Erfüllung ihrer beschriebenen Funktion könnte die Ueberwachungseinrichtung 3.2 wie in Fig. 1 dargestellt aus einem Differenzierglied 3.2.1, einem Differenzverstärker 3.2.2, zwei Grenzwertgliedern 3.2.3 und 3.2.4 sowie einem Oder-Glied 3.2.5 aufgebaut sein. Bei einem solchen Aufbau würde im Differenzierglied 3.2.1 zunächst die zeitliche Ableitung $dU(t)/dt$ der Spannung auf der Energieversorgungsleitung 1 gebildet. Durch den Differenzverstärker 3.2.2 würde die Differenz zwischen dem jeweiligen Momentanwert dieser Ableitung und ihres dem Momentanwert jeweiligen Sollwerts $dU_o(t)/dt$ gebildet, welcher dem Differenzverstärker 3.2.2 zugeführt werden müsste. In den Grenzwertgliedern 3.2.3 und 3.2.4 würde diese Differenz mit einem positiven Grenzwert $G_1$ und einem negativen Grenzwert $G_2$ verglichen. Die digitalen Ausgänge der beiden Grenzwertglieder 3.2.3 und 3.2.4 würden schliesslich durch das Oder-Glied 3.2.5 zu einem gemeinsamen Ausgang kombiniert durch welchen das Schaltelement 3.3 immer dann geöffnet würde, wenn der positive Grenzwert $G_1$ in positiver Richtung oder der negative Grenzwert $G_2$ in negativer Richtung überschritten würde.

Als Schaltelement 3.3 kann ein elektromechanischer Schalter (z.B. ein Reed-Relais), ein Transistorschalter, ein Thyristor, vorzugsweise jedoch ein ausschaltbarer Thyristor (GTO) verwendet werden. Der Vorteil von Transistor-
oder Thyristorschaltern sind im wesentlichen durch deren
schnelles Schaltvermögen gegeben, das beispielsweise
nach einer Schalteröffnung ein phasenrichtiges Wiedereinschalten ermöglicht. Die Vorteile elektromechanischer
Schalter liegen beispielsweise in der durch sie erreichbaren galvanischen Trennung. Auch ist ihre Verlustleistung im allgemeinen geringer als die von Halbleiterschaltern. Bei Strömen im kA-Bereich kann sich die Restspannung von Halbleiterschaltern im Bereich von ca. 0,2
bis 1 Volt recht ungünstig auswirken. Mit Reed-Relais
lassen sich im übrigen auch Schaltzeiten unterhalb einer
Millisekunde erreichen.

Zwischen dem Anschlusspunkt 3.4 und dem Schaltelement 3.3
wird in der Energieversorgungsleitung 1 vorzugsweise
ein Laufzeitglied vorgesehen. Das Laufzeitglied dient
dazu, die Laufzeit einer Störung zwischen dem Anschlusspunkt 3.4 und dem Schaltelement 3.3 zu verzögern. Die
Laufzeitverzögerung wird vorzugsweise so gewählt, dass
die Ueberwachungseinrichtung 3.2 genügend Zeit hat,
das Schaltelement 3.3 zu öffnen, noch bevor die Störung
dieses erreicht. Als Laufzeitglied kann beispielsweise,
wie in Fig. 1 dargestellt, das LC-Netzwerk 3.1 verwendet
werden. Das LC-Netzwerk 3.1 verhindert auch Netzrückwirkungen infolge vom Schaltelement 3.3 verursachten
Schaltspitzen.

Um die vom Schaltelement 3.3 verursachten Schaltspitzen
vom Verbraucher 2 fernzuhalten wird vorzugsweise in
der Energieversorgungsleitung 1, wie in Fig. 1 dargestellt,
ein weiteres LC-Netzwerk mit Tiefpasseigenschaften 3.5
verbraucherseitig nach dem Schaltelement 3.3 angeordnet.

Damit der Verbraucher 2 während das Schaltelement 3.3
geöffnet ist nicht ohne Energieversorgung ist, wird in der Energieversorgungsleitung 1, wie wiederum in Fig. 1 dargestellt, verbraucherseitig nach dem Schaltelement auch noch eine Energiespeicherschaltung 3.6 vorgesehen. Diese kann beispielsweise aus einer an die Energieversorgungsleitung 1 angeschlossenen Batterie 3.6.1 bestehen, wobei, sofern die Energieversorgungsleitung 1 eine Wechselspannungsleitung ist, netzseitig vor dem Anschlusspunkt 3.6.2 der Batterie 3.6.1 ein Gleichrichter 3.6.3 und verbraucherseitig nach diesem Anschlusspunkt ein Wechselrichter 3.6.4 zusätzlich in der Energieversorgungsleitung 1 angeordnet sein müssten. Anstelle der Batterie genügt unter Umständen schon ein Kondensator mit genügend hoher Kapazität.

Schliesslich kann vorzugsweise netzseitig vor allen übrigen Elementen der Schutzvorrichtung 3 innerhalb dieser noch ein Ueberspannungsableiter 3.7 vorgesehen werden. Der Ueberspannungsableiter 3.7 kann beispielsweise ein ZnO-Varistor sein.

- 1 -

Patentansprüche

1. Schutzvorrichtung für einen an eine Energieversorgungsleitung eines elektrischen Energienetzes angeschlossenen Verbraucher mit einem netzseitig vor den Verbraucher
in die Energieversorgungsleitung geschalteten LC-Netzwerk mit Tiefpasseigenschaften und mit einem mit dem
LC-Netzwerk in Reihe in die Energieversorgungsleitung
geschalteten, von einer Ueberwachungseinrichtung gesteuerten Schaltelement, wobei die Ueberwachungseinrichtung netzseitig an einem Anschlusspunkt vor dem
Schaltelement an die Energieversorgungsleitung angeschlossen ist und das Schaltelement nur solange geschlossen hält, als der Momentanwert der zeitlichen
Ableitung der Spannung (dU(t)/dt) auf der Energieversorgungsleitung von einem vorgebbaren Sollwert nicht
um mehr als einen gleichfalls vorgebbaren Betrag abweicht, dadurch gekennzeichnet, dass der Sollwert der
zeitlichen Ableitung der Spannung zeitlich variabel
und in seinem zeitlichen Verlauf vorgebbar ist, dass
das Schaltelement ein elektronisches Schaltelement
ist und dass zwischen dem Anschlusspunkt der Ueberwachungseinrichtung und dem Schaltelement ein Verzögerungsglied mit vorzugsweise einer der Ansprechverzögerung der Ueberwachungseinrichtung mindestens entsprechenden Laufzeitverzögerung in der Energieversorgungsleitung angeordnet ist.

2. Schutzvorrichtung nach Anspruch 1, dadurch gekennzeichnet, dass als Schaltelement (3.3) ein elektromechanischer Schalter, ein Transistorschalter oder
ein Thyristor, insbesondere jedoch ein ausschaltbarer Thyristor verwendet ist.

3. Schutzvorrichtung nach Anspruch 1, dadurch gekennzeichnet, dass das LC-Netzwerk (3.1) als Verzögerungsglied verwendet ist.

4. Schutzvorrichtung nach Anspruch 1, dadurch gekennzeichnet, dass neben dem LC-Netzwerk (3.1) ein weiteres LC-Netzwerk (3.5) mit Tiefpasseigenschaften derart in die Energieversorgungsleitung (1) geschaltet ist, dass das Schaltelement (3.3) zwischen beiden LC-Netzwerken (3.1, 3.5) angeordnet ist.

5. Schutzvorrichtung nach Anspruch 1, dadurch gekennzeichnet, dass sie mit mindestens einem, vorzugsweise netzseitig vor dem Anschlusspunkt (3.4) angeordneten Ueberspannungsableiter (3.7) versehen ist.

6. Schutzvorrichtung nach Anspruch 1, dadurch gekennzeichnet, dass verbraucherseitig nach dem Schaltelement (3.3) eine Energiespeicherschaltung (3.6) angeordnet ist, durch welche bei geöffnetem Schaltelement (3.3) die Energieversorgung des Verbrauchers (2) sichergestellt ist.

7. Schutzvorrichtung nach Anspruch 6, dadurch gekennzeichnet, dass die Energiespeicherschaltung (3.6) durch eine, an die Energieversorgungsleitung (1) angeschlossene Batterie (3.6.1) oder einen Kondensator gebildet ist.

8. Schutzvorrichtung nach Anspruch 7, dadurch gekennzeichnet, dass bei Wechselspannung auf der Energieversorgungsleitung (1) netzseitig vor dem Anschlusspunkt (3.6.2) der Batterie (3.6.1) ein Gleichrichter (3.6.3) und verbraucherseitig nach diesem Anschlusspunkt (3.6.2) ein Wechselrichter (3.6.4) in der Energieversorgungsleitung (1) angeordnet ist.

FIG. 1

## Europäisches Patentamt

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | AU-B- 516 932 (ESQUIRE)<br><br>* Seite 14, Zeile 6 - Seite 17, Zeile 7; Figuren 6,7 *<br>--- | 1-3,5-8 | H 02 H 3/44 |
| A | GB-A-2 060 299 (BORG-WARNER)<br>* Figur 1; Seite 4, Zeilen 56-72 *<br><br>----- | 1-3 | |

| | |
|---|---|
| | RECHERCHIERTE SACHGEBIETE (Int. Cl.4) |
| | H 02 H |

Der vorliegende Recherchenbericht wurde für alle Patentansprüche erstellt.

| Recherchenort | Abschlußdatum der Recherche | Prüfer |
|---|---|---|
| DEN HAAG | 26-07-1986 | KOLBE W.H. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82